# EUROPEAN PATENT APPLICATION

(11) **EP 3 214 741 A1**
(43) Date of publication of application: **06.09.2017**
(21) Application number: 15855049.1
(22) Date of filing: 27.10.2015
(51) Int. Cl.: H02K 41/02, H02K 11/21

(54) **LINEAR ACTUATOR**

(30) Priority: 29.10.2014 JP 2014220156
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080283
(87) International publication number: WO 2016/068146

(57) **Abstract**

A linear actuator (100) includes, a first tube (10) provided with a plurality of coils (41) placed thereinside, the plurality of coils (41) being held by a tubular yoke (40); a rod (30) movable in an axial direction inside the yoke (40); a plurality of permanent magnets (31) held by the rod (30) while being lined up in the axial direction, the plurality of permanent magnets (31) opposing the plurality of coils (41); and a pair of trunnion shafts (1) mounted coaxially on an outer circumferential portion of the first tube (10). At least one of the pair of trunnion shafts (1) is provided with a through hole (1A). Wires (44) connected to the plurality of coils (41) are drawn via the through hole (1A).

## Description

### TECHNICAL FIELD

The present invention relates to a linear actuator that is extended and contracted in an axial direction by an electromagnetic force.

### BACKGROUND ART

JP 2008-253009A discloses an electric actuator in which stator cores and armature coils are placed inside a fixed-side main body that has a power supply port via which power is supplied to the armature coils.

### SUMMARY OF INVENTION

With the linear actuator described in JP 2008-253009A, wires drawn from the armature coils are directed to the outside via the power supply port. This linear actuator requires a protection member projecting from an outer circumference of the fixed-side main body just to protect the drawn wires.

The present invention aims to provide a linear actuator that does not require a protection member projecting from an outer circumference just to direct wires drawn from coils to the outside.

According to one aspect of the present invention, a linear actuator includes, a main body portion provided with a plurality of coils placed thereinside, the plurality of coils being held by a tubular yoke; a rod movable in an axial direction inside the yoke; a plurality of permanent magnets held by the rod while being lined up in the axial direction, the plurality of permanent magnets opposing the plurality of coils; and a pair of trunnion shafts mounted coaxially on an outer circumferential portion of the main body portion. At least one of the pair of trunnion shafts is provided with a through hole. Wires connected to the plurality of coils are drawn via the through hole.

### BRIEF DESCRIPTION OF DRAWINGS

FIG. 1A is a cross-sectional view of a linear actuator in a contracted state according to a first embodiment of the present invention, taken along an axial direction.
FIG. 1B is a cross-sectional view taken along the line A-A in FIG. 1A.
FIG. 2 is a cross-sectional view of a linear actuator in a contracted state according to a second embodiment of the present invention, taken along an axial direction.

### DESCRIPTION OF EMBODIMENTS

Embodiments of the present invention will now be described with reference to the drawings.

### First Embodiment

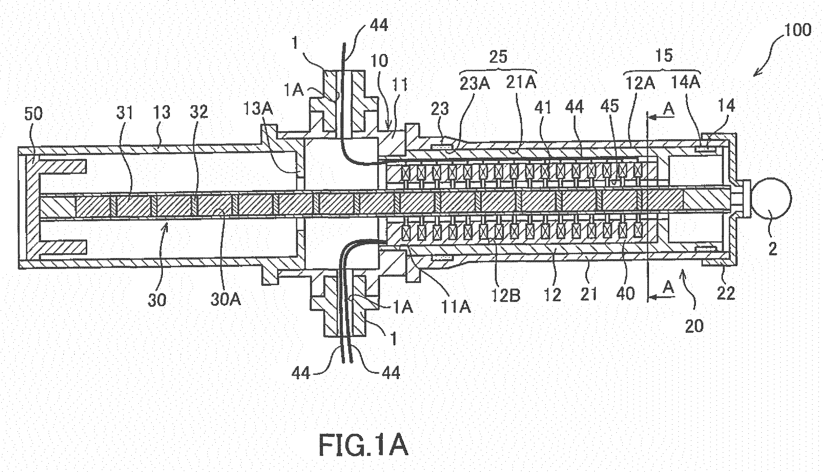

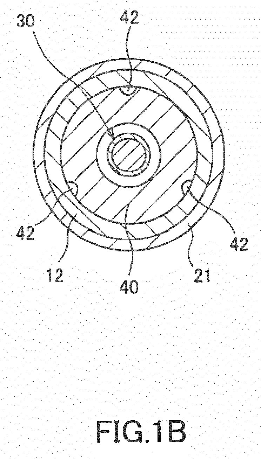

The following describes a linear actuator 100 according to a first embodiment of the present invention with reference to FIGs. 1A and 1B. FIG. 1A is a cross-sectional view of the linear actuator 100 taken along a direction of an axis line. FIG. 1B is a cross-sectional view taken along the line A-A in FIG. 1A.

The linear actuator 100 includes a first tube 10 serving as a main body portion, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in an axial direction is generated in accordance with a current flowing through the coils 41, and the first tube 10 and the second tube 20 are relatively displaced on the basis of the thrust. This causes the linear actuator 100 to extend and contract between a fully contracted position shown in FIG. 1A and a fully extended position (not shown).

The first tube 10 includes a base portion 11 having a shape of a hollow cylinder, an inner tube 12 that is fixed to one end side of the base portion 11, and a guide tube 13 that is fixed to the other end side of the base portion 11.

The base portion 11 is a tubular member that is open at both ends. A pair of trunnion shafts 1 projecting in a radial direction is fixed to an outer circumference of the base portion 11. The pair of trunnion shafts 1 is rotatably supported by an external member (not shown). Accordingly, the linear actuator 100 is held in such a manner that it is rotatable with respect to the external member. Each of the pair of trunnion shafts 1 has a through hole 1A. Instead of providing each of the pair of trunnion shafts 1 with the through hole 1A, only one of the pair of trunnion shafts 1 may be provided with the through hole 1A. That is to say, at least one of the pair of trunnion shafts 1 has the through hole 1A.

The second tube 20 includes an outer tube 21 that has a shape of a hollow cylinder and is open at both ends, and a cap 22 that is attached to one end of the outer tube 21. One end of the second tube 20 is closed by the cap 22. The other end of the second tube 20 is an open end into which the inner tube 12 of the first tube 10 is inserted. A joint member 2 that is joined with the external member (not shown) is fixed to an outer side surface of the cap 22.

The inner tube 12 is slidably inserted into the outer tube 21 while being mounted on the base portion 11. One end of the inner tube 12 is fixedly fit on an inner circumferential surface 11A of the base portion 11. That is to say, the inner tube 12 is supported by the base portion 11 at one end.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of a free end of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The guide tube 13 is a tubular member that is open at both ends. A rod guide 50 that is fixed to an end of the rod 30 is slidably placed inside the guide tube 13.

The rod 30 is a pole-like member with a hollow portion 30A. One end of the rod 30 is fixed to the inner side of the cap 22 that constitutes an end of the second tube 20. The other end of the rod 30 is fixed to the aforementioned rod guide 50. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other.

The yoke 40 having a shape of a hollow cylinder is mounted on an inner circumferential surface 12B of the inner tube 12. The yoke 40 has an insertion hole 45 through which the rod 30 is inserted in the axial direction. The plurality of coils 41 are embedded in the yoke 40. Note that the yoke 40 is made by integrally stacking ring-shaped members in the axial direction, with each coil 41 wound inside a space formed by contacting surfaces of neighboring ring-shaped members. The plurality of coils 41 are lined up in the axial direction so as to oppose the permanent magnets 31. Note that each of the ring-shaped members that constitute the yoke 40 may be formed by joining a plurality of members that are separated from one another in a circumferential direction.

An outer circumference of the yoke 40 has a plurality of grooves 42 serving as groove portions. Each groove 42 runs in a direction of an axis line. Wires 44 from the plurality of coils 41 are housed in the grooves 42. Note that the grooves 42 are not limited to being provided at three positions, however, the grooves 42 may be provided at four positions, or any number of grooves 42 may be provided. The groove portions may be cutouts formed in corners of joined surfaces of the plurality of members that are separated from one another and that constitute the ring-shaped members. Instead of being provided on an outer circumferential surface of the yoke 40, the grooves 42 may be provided on the inner circumferential surface 12B of the inner tube 12. The grooves 42 may be provided on both of the outer circumferential surface of the yoke 40 and the inner circumferential surface 12B of the inner tube 12.

The wires 44 from the plurality of coils 41 are drawn to the outside via the grooves 42 and the through holes 1A provided in the trunnion shafts 1. Once the wires 44 have been drawn to the outside, they are connected to a controller (not shown). The controller controls the thrust generated by the linear actuator 100 and the directions of the generated thrust (the extension and contraction directions) by controlling the intensity and phase of the current supplied to the coils 41. Note that the wires 44 may be drawn via a connector(s). Each trunnion shaft 1 is not limited to having one through hole 1A; it may have any number of through holes 1A depending on the number of the drawn wires 44.

A description is now given of the operation of the linear actuator 100.

In the linear actuator 100, when the coils 41 are supplied with a current of a predetermined direction, a thrust that drives the rod 30 in one direction (a rightward direction in FIG. 1A) is generated. Along with the driving of the rod 30 in one direction, the linear actuator 100 extends as the outer tube 21 of the second tube 20 moves while sliding with respect to the inner tube 12 of the first tube 10.

In the guide tube 13, its end fixed to the base portion 11 has an annular projected portion 13A that projects inward. When the linear actuator 100 has extended to the fully extended position, the rod guide 50 is in contact with a side surface of the projected portion 13A, thereby restricting a further movement of the rod 30. As such, the rod guide 50 functions as a stopper.

On the other hand, when the coils 41 are supplied with a current with a phase opposite to a phase of the current supplied during the extension, a thrust that drives the rod 30 in the other direction (a leftward direction in FIG. 1A) is generated. Along with the driving of the rod 30 in the other direction, the linear actuator 100 contracts as the outer tube 21 of the second tube 20 moves while sliding with respect to the inner tube 12 of the first tube 10.

When the linear actuator 100 has contracted to the fully contracted position, an open end of the outer tube 21 is in contact with an end of the base portion 11, thereby restricting a further movement of the rod 30. As such, the open end of the outer tube 21 functions as a stopper.

The foregoing first embodiment achieves the following effect.

The trunnion shafts 1, which are mounted on an outer circumferential portion of the first tube 10, have the through holes 1A via which the wires 44 connected to the plurality of coils 41 are drawn. In this way, the drawn wires 44 can be protected by taking advantage of existing members. Therefore, it is not necessary to provide a protection member projecting from an outer circumference just to direct the wires 44 from the plurality of coils 41 to the outside.

### Second Embodiment

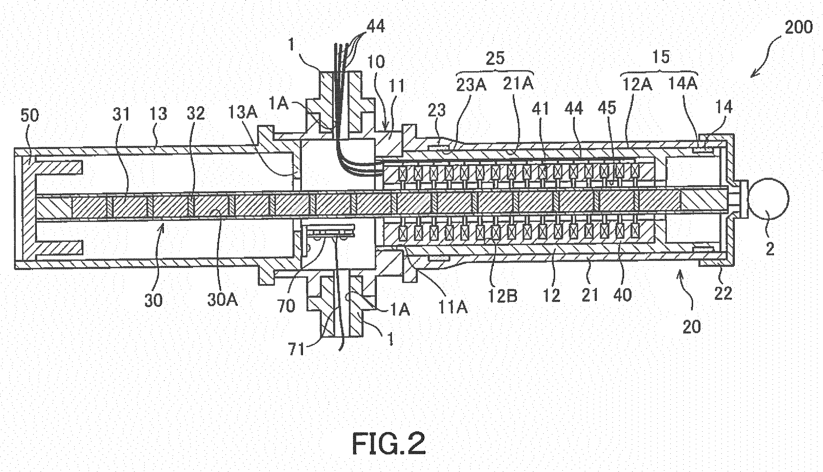

The following describes a linear actuator 200 according to a second embodiment of the present invention with reference to FIG. 2. In the following description of the second embodiment, differences from the above first embodiment will be focused. Furthermore, components that are the same as components of the linear actuator 100 according to the first embodiment will be given the same reference signs thereas, and the explanation thereof will be omitted.

The second embodiment differs from the first embodiment in that a stroke sensor 70 is provided.

The stroke sensor 70 incorporates a Hall sensor that generates a Hall voltage in accordance with the strength of a magnetic field. The stroke sensor 70 detects relative positions of coils 41 and permanent magnets 31 on the basis of the Hall voltage generated by the Hall sensor.

Signals detected by the stroke sensor 70 are input to an external controller via wires 71. The controller calculates the strokes of the second tube 20 with respect to the first tube 10 on the basis of information detected by the stroke sensor 70, that is
to say, the relative positions of the coils 41 and the permanent magnets 31. The controller controls the intensity and phase of a current flowing through the coils 41 while feeding back the strokes of the second tube 20 with respect to the first tube 10. In this way, the linear actuator 200 can be controlled more accurately.

Note that a sensor provided in the linear actuator 200 is not limited to the stroke sensor 70; any sensor may be provided as long as it detects an operational state of the linear actuator. One example is a temperature sensor that detects a temperature state of the coils 41. Furthermore, the linear actuator 200 may be provided with a plurality of sensors that detect different operational states of the linear actuator 200, e.g., the stroke sensor 70 and the temperature sensor.

In the linear actuator 200, the wires 44 from the plurality of coils 41 are drawn via a through hole 1A provided in one of a pair of trunnion shafts 1, whereas the wires 71 from the stroke sensor 70 is drawn via a through hole 1A provided in the other of the pair of trunnion shafts 1.

The foregoing second embodiment achieves the following effects in addition to the effect achieved by the first embodiment.

Due to the addition of the stroke sensor 70, which detects an operational state of the linear actuator 200, the operation of the linear actuator 200 can be controlled more accurately. Furthermore, the wires 44 from the plurality of coils 41 are drawn via the through hole 1A provided in one of the pair of trunnion shafts 1, whereas the wires 71 from the stroke sensor 70 is drawn via the through hole 1A provided in the other of the pair of trunnion shafts 1. In this way, the signals detected by the stroke sensor 70 are not influenced by a large current flowing through the wires 44 from the coils 41. Therefore, the signals detected by the stroke sensor 70 are accurately input to the controller without being influenced by a disturbance. Consequently, the operation of the linear actuator 200 can be controlled more accurately.

Embodiments of this invention were described above, but the above embodiments are merely examples of applications of this invention, and the technical scope of this invention is not limited to the specific constitutions of the above embodiments.

This application claims priority based on Japanese Patent Application No.2014-220156 filed with the Japan Patent Office on October 29, 2014, the entire contents of which are incorporated into this specification.

## Claims

1. A linear actuator, comprising:
a main body portion provided with a plurality of coils placed thereinside, the plurality of coils being held by a tubular yoke;
a rod movable in an axial direction inside the yoke;
a plurality of permanent magnets held by the rod while being lined up in the axial direction, the plurality of permanent magnets opposing the plurality of coils; and
a pair of trunnion shafts mounted coaxially on an outer circumferential portion of the main body portion,
wherein
at least one of the pair of trunnion shafts is provided with a through hole, wires connected to the plurality of coils are drawn via the through hole.

2. The linear actuator according to claim 1, further comprising
a sensor for detecting an operational state of the linear actuator.

3. The linear actuator according to claim 2,
wherein
the sensor is a stroke sensor.

4. The linear actuator according to claim 2,
wherein
wires connected to the plurality of coils are drawn via the through hole provided in one of the pair of trunnion shafts, and
wires connected to the sensor are drawn via the through hole provided in the other of the pair of trunnion shafts.

5. The linear actuator according to claim 1,
wherein
a groove portion running in a direction of an axis line is provided on an outer circumferential portion of the yoke, and
wires connected to the plurality of coils are housed inside the groove portion.
